# EUROPEAN PATENT APPLICATION

(11) **EP 2 199 136 A1**
(43) Date of publication of application: **23.06.2010**
(21) Application number: 08839641.1
(22) Date of filing: 15.10.2008
(51) Int. Cl.: B60K 6/36, B60K 6/26, B60K 6/365, B60K 6/387, B60K 6/40, B60K 6/48, B60K 6/547, B60L 11/14

(54) **POWER TRANSMISSION DEVICE**

(30) Priority: 18.10.2007 JP 2007271556
(71) Applicant: AISIN AI Co., Ltd., Nishio-shi Aichi 445-0006 (JP)
(72) Inventor: SASAKI, Kan, Nishio-shi Aichi 445-0006 (JP)
(74) Representative: Winter, Brandl, Fürniss, Hübner Röss, Kaiser, Polte Partnerschaft Patent- und Rechtsanwaltskanzlei
(86) International application number: PCT/JP2008/068678
(87) International publication number: WO 2009/051143

(57) **Abstract**

A power transmission apparatus according to the present invention is **characterized in that** it comprises: a multistaged change-speed mechanism (3) having an input shaft (31) to which a rotary power that is output from an output shaft (21) of an internal combustion engine (2) is input, and an output shaft (32) for changing the rotary power, which is input from the input shaft (31), in speed with a plurality of switchable speed reducing ratios, and then outputting the resulting rotary power to wheels; a rotary electric device (4); a rotary-electric-device-side output shaft (43) for outputting a rotary power of the rotary electric device (4) to the wheels; a first power interrupting mechanism (51) for switching the connection and disconnection of rotary-power transmission between the input shaft (31) of the multistaged change-speed mechanism (3) and a rotor (4) of the rotary electric device (4); a second power interrupting mechanism (52) for switching the connection and disconnection of rotary-power transmission between the rotary-electric-device-side output shaft (43) and the rotor (42) of the rotary electric device (44); and a controlling unit for controlling the rotary electric device (4), the first power interrupting mechanism (51), and the second power interrupting mechanism (52).

## Description

### TECHNICAL FIELD

The present invention relates to a power transmission apparatusthatusesmanualchange-speed mechanism or automated manual change-speed mechanism; in particular, it relates to a power transmission apparatus for hybrid vehicle that has a rotary electric device additionally as the power source.

### BACKGROUND ART

Recently, hybrid vehicles have been developed, hybrid vehicles which have a motor additionally as the power source (Patent Literature No. 1). In hybrid vehicles, it is feasible to intend the improvement of fuel consumption by utilizing revolution-speed ranges where the internal combustion engine and the motor exhibit good efficiency respectively, or by making use of them simultaneously.

For example, as for the power transmission apparatus for hybrid vehicle by means of a combination of manual change-speed mechanism and motor, the following are available; an apparatus in which a motor is put in place between the output side of internal combustion engine and the input side of manual change-speed mechanism (or on the upstream side); and an apparatus in which a motor is put in place on the output side of manual change-speed mechanism (or on the downstream side).
Patent Literature No. 1: Japanese Unexamined Patent Publication (KOKAI) Gazette No. 2000-224,710

### DISCLOSURE OF THE INVENTION

### Assignment to be Solved by the Invention

However, in the case where a motor is put in place on the upstream side of manual change-speed mechanism, the mechanism for adding the motor gets complicated and jumboized, and accordingly there is such a problem that the vehicle boardability worsens. In addition, not only the cost increases but also the weight increases. Moreover, in the case where a motor is put in place on the downstream side of manual change-speed mechanism, such utilization as starting an internal combustion engine using the motor cannot be done.

The present invention is one which has been done in view of the aforementioned assignments, and it is an assignment to provide a power transmission apparatus which neither gets complicated nor jumboized, whose cost does not go up, whose weight does not increase, and which can make use of motor upon starting internal combustion engine.

### Means for Solving the Assignment

In order to solve the aforementioned assignment, a constructional characteristic of an invention that is directed to claim 1 lies in that it comprises:
a multistaged change-speed mechanism having an input shaft to which a rotary power that is output from an output shaft of an internal combustion engine is input, and an output shaft for changing said rotary power, which is input from said input shaft, in speed with a plurality of switchable speed reducing ratios, and then outputting the resulting rotary power to wheels;
a rotary electric device;
a rotary-electric-device-side output shaft for outputting a rotary power of said rotary electric device to said wheels;
a first power interrupting mechanism for switching the connection and disconnection of rotary-power transmission between said input shaft of said multistaged change-speed mechanism and a rotor of said rotary electric device;
a second power interrupting mechanism for switching the connection and disconnection of rotary-power transmission between said rotary-electric-device-side output shaft and said rotor of said rotary electric device; and
a controlling unit for controlling said rotary electric device, said first power interrupting mechanism, and said second power interrupting mechanism.

Moreover, a constructional characteristic of an invention that is directed to claim 2 lies in that, in claim 1, a stator of said rotary electric device is positioned on an outer peripheral side of said rotor, and said rotor has a ring configuration; said output shaft of said internal combustion engine, said input shaft of said multistaged change-speed mechanism, said rotor of said rotary electric device, and a rotary shaft of said rotary-electric-device-side output shaft are all coaxial; and said first power interrupting mechanism, and said second power interrupting mechanism are disposed on an inner peripheral side of said rotor while lining up in an axial direction of said output shaft of said internal combustion engine.

Moreover, a constructional characteristic of an invention that is directed to claim 3 lies in that, in claim 1 or 2, said output shaft of said multistaged change-speed mechanism has an output gear that meshes with a final deceleration gear; said input shaft of said multistaged change-speed mechanism, and said output shaft thereof are disposed to protrude parallelly on a side of said rotary electric device; and said rotary-electric-device-side output shaft has a rotary-electric-device-side output gear for transmitting a rotary power to said final deceleration gear by way of said output gear.

Moreover, a constructional characteristic of an invention that is directed to claim 4 lies in that, in claim 1 or 2, said rotary-electric-device-side output shaft has a rotary-electric-device-side output gear; and the power transmission apparatus further comprises an additional shaft having a transmission gear that meshes with both of said rotary-electric-side output gear and said final deceleration gear between them, thereby transmitting a rotary power from said rotary-electric-side output gear to said final deceleration gear.

Moreover, a constructional characteristic of an invention that is directed to claim 5 lies in that, in either of claims 1-4, the power transmission apparatus has a planetary gear mechanism in which said rotary-electric-device-side output shaft is connected to one of the elements and said rotor of said rotary electric is disconnected from and connected to another one of the elements by way of said second power interrupting mechanism.

Moreover, a constructional characteristic of an invention that is directed to claim 6 lies in that, in claim 1 or 2, said multistaged change-speed mechanism comprises a counter shaft; the rotary power of said internal combustion engine, and the rotary power of said rotary electric device are transmitted to said input shaft of said multistaged change-speed mechanism, and to said output shaft, by way of said counter shaft; said input shaft of said multistaged change-speed mechanism, and said counter shaft thereof are disposed to protrude parallelly on a side of said rotary electric device; said counter shaft has a rotary-electric-device-side input gear to which an output of said rotary electric device is input; and said rotary-electric-device-side output shaft has a rotary-electric-device-side output gear that meshes with said rotary-electric-device-side input gear.

Moreover, a constructional characteristic of an invention that is directed to claim 7 lies in that, in claim 1 or 2, said multistaged change-speed mechanism comprises a counter shaft, and an additional shaft; the rotary power of said internal combustion engine, and the rotary power of said rotary electric device are transmitted to said input shaft of said multistaged change-speed mechanism, and to said output shaft, by way of said counter shaft; said input shaft of said multistaged change-speed mechanism, and said additional shaft thereof are disposed to protrude parallelly on a side of said rotary electric device; said rotary-electric-device-side output shaft has a rotary-electric-device-side output gear for transmitting the rotary power of said rotary electric device to a side of said output shaft; said output shaft has an additional-shaft-side input gear in order that the rotary power of said rotary electric device is transmitted by way of said additional shaft; and said additional shaft has an input-side transmission gear at one of the ends, input-side transmission gear which meshes with said rotary-electric-device-side output gear, and an output-side transmission gear that meshes with said input-shaft-side input gear.

### Effect of the Invention

In the invention that is directed to claim 1, it is possible to adapt it into a construction in which the rotary electric device is connected to an upstream side of the multistaged change-speed mechanism, and to a downstream side thereof, because a rotor of the rotary electric device can be connected to the input shaft of the multistaged change-speed mechanism (i.e., on the upstream side) by way of the first power interrupting mechanism, and because the rotary-electric-device-side output shaft can be connected to the rotor of the rotary electric device by way of the second power interrupting mechanism on an output-shaft side of the multistaged change-speed mechanism (i.e., on the downstream side). It is possible to materialize a power transmission apparatus with both of the following characteristics: it is possible to make use of the rotary electric device for starting the internal combustion engine when the rotary electric device is connected to the upstream side; and it is possible to make use of the rotary power, which is output from the rotary electric device, as a motive power without intervening the multistaged change-speed mechanism when it is connected to the downstream side; and the like. And, by sharing the starting of the internal combustion engine and the generation of electricity with the rotary electric device, it becomes feasible to downsize the starter and alternator, or to omit them, so that the costs can be suppressed. Besides that, at the time of traveling where the internal combustion engine runs efficiently, both of the first power interrupting mechanism and second power interrupting mechanism are disconnected, and then the giving and receiving of the motive power to and from the rotary electric device are turned off, and accordingly it is also possible to avoid the loss of electricity or driving force, and consequently it is possible to drive with good fuel-consumption performance depending on traveling conditions.

In the invention that is directed to claim 2, it is possible to suppress the overall length from enlarging so that it can be constructed compactly, because it is possible to adapt it into a power transmission mechanism, in which the first and second power interrupting mechanisms are put in place on an inner side of the rotary electric device, even when the rotary electric device and power interrupting mechanisms are added.

In the invention that is directed to claim 3, it is possible to adapt it into a construction in which the input shaft of the multistaged change-speed mechanism, and the output shaft are close to the rotor of the rotary electric device, to which they are connected by way of the first or second power interrupting mechanisms, by disposing the input shaft and output shaft of the multistaged change-speed mechanism to protrude toward an output side of the rotary electric device when connecting the rotary electric device to the upstream and downstream sides of the multistaged change-speed mechanism. That is, although the construction gets complicated in order to connect the rotor of the rotary electric device to a distant shaft because the rotor of the electric device gets away from one of the input and output shafts when it is close to the other one of them, it is possible to avoid the construction from getting complicated by means of disposing both of the shafts to protrude toward a side in the same direction. Hence, even when connecting the rotor of the rotary electric device to the upstream and downstream sides, the construction does not get complicated, but it can be constructed compactly.

In the invention that is directed to claim 4, it is possible to increase the degree of freedom on gear ratios for transmitting a power from the rotor of the rotary electric device to the final deceleration gear by adding a shaft, which is put in place parallel to the output shaft of the internal combustion engine and the input and output shafts of the multistaged change-speed mechanism, and then by putting one or more transmission gears onto that additional shaft. Moreover, it is possible to adjust the rotary direction of rotary power that is transmitted to the final deceleration gear by adding the shaft. For example, general multistaged change-speed mechanisms exhibit rotary directions between the input shaft and the output shaft that become opposite to each other. As a result, since a rotary direction of the final deceleration gear, which is coupled to the output shaft, becomes the same direction as that of the input shaft of the multistaged change-speed mechanism, it is not possible to transmit a rotary power from the rotary-electric-device-side output gear to the final deceleration gear directly in a case where a rotary direction of the rotary-electric-device-side output shaft is made identical to that of the input shaft of the multistaged change-speed apparatus. Hence, it is possible to reverse the rotary direction of a rotary power to be transmitted by adding the additional shaft between the two, and then it is possible to carry out the transmission of the rotary power from the rotary-electric-device-side output shaft to the final deceleration gear smoothly.

In the invention that is directed to claim 5, it is possible to increase the degree of freedom on gear ratios by putting a planetary gear mechanism, which comprises a sun gear, a planetary gear and a ring gear, in place on a side of the rotary-electric-device-side output shaft. Compared with the construction as set forth in claim 4 in which a shaft is added and then a transmission gear is put in place onto that additional shaft, it is possible to increase the degree of freedom on gear ratios furthermore.

In the invention that is directed to claim 6, it further comprises a counter shaft other than the input shaft and output shaft, and the counter shaft is disposed to protrude toward a side of the rotary electric device along with the input shaft. And, an output of the rotary electric device can be input to the counter shaft, and can then be transmitted to the output shaft. Hence, even in such power transmission mechanisms with the construction in which a rotary power being input to the input shaft is transmitted to the output shaft by way of the counter shaft, it is possible to adapt those easily into a construction that comprises both a rotary electric device and an internal combustion engine by adding a rotary electric device and one pair of gears.

In the invention that is directed to claim 7, it further comprises a counter shaft and an additional shaft other than the input shaft and output shaft, and the input shaft and additional shaft are disposed to protrude toward a side of the rotary electric device. An output from the rotary electric device can be transmitted to the output shaft. Even in such power transmission mechanisms with this construction as well, it is possible to adapt those into a construction that comprises both a rotary electric device and an internal combustion engine by adding a rotary electric device and two pairs of gears.

### BRIEF DESCRIPTION OF THE DRAWINGS

Fig. 1 is a schematic diagram for illustrating a construction of a power transmission apparatus 10 according to present Embodying Mode No. 1;
Fig. 2 is a schematic diagram for illustrating a construction of a power transmission apparatus 11 according to present Embodying Mode No. 2;
Fig. 3 is a schematic diagram for illustrating a construction of a power transmission apparatus 12 according to present Embodying Mode No. 3;
Fig. 4 is a schematic diagram for illustrating a construction of a power transmission apparatus 13 according to present Embodying Mode No. 4;
Fig. 5 is an explanatory diagram that is partly enlarged for illustrating constructions of a first power interrupting mechanism 53 and a second power interrupting mechanism 54 that are used in a power transmission apparatus according to present Embodying Mode No. 5;
Fig. 6 is a schematic diagram for illustrating a construction of a power transmission apparatus 14 according to present Embodying Mode No. 6;
Fig. 7 is a schematic diagram for illustrating a construction of a power transmission apparatus 15 according to present Embodying Mode No. 7;
Fig. 8 is a schematic diagram for illustrating a construction of the power transmission apparatus 15 according to present Embodying Mode No. 7;
Fig. 9 is a schematic diagram for illustrating a construction of a power transmission apparatus 16 according to present Embodying Mode No. 8;
Fig. 10 is a schematic diagram for illustrating a construction of a power transmission apparatus 17 according to present Embodying Mode No. 9; and
Fig. 11 is a schematic diagram for illustrating a construction of a power transmission apparatus 18 according to present Embodying Mode No. 10.

### Explanation on Reference Numerals

- 10-18:: Power Transmission Apparatuses;
- 2:: Internal Combustion Engine;
- 21:: Output Shaft;
- 3:: Multistaged Change-speed Mechanism;
- 31:: Input Shaft;
- 311-315:: Drive Gears;
- 316:: Input Gear;
- 32:: Output Shaft;
- 321, 322:: Output Gears;
- 323:: Additional-shaft-side Input Gear;
- 33:: Counter Shaft;
- 331:: Rotary-electric-device-side Input Gear;
- 332:: Driven Gear;
- 333-337:: Counter Gears;
- 338:: Counter-shaft-side Input Gear;
- 4:: Rotary Electric Device;
- 41:: Stator;
- 42:: Rotor;
- 421:: Rotary Supporting Member;
- 43:: Rotary-electric-device-side Output Shaft;
- 431:: Rotary-electric-device-side Output Gear;
- 44:: Sleeve;
- 441:: Groove;
- 442, 443, 531, 541:: Engager Teeth;
- 51, 53:: First Power Interrupting Mechanisms;
- 52, 54:: Second Power Interrupting Mechanisms;
- 55:: Ordinary Clutch;
- 6:: Additional Shaft;
- 61-65:: Transmission Gears;
- 71:: Final Deceleration Gear;
- 73:: Differential Mechanism; and
- 90:: Case

### Best Mode for Carrying Out the Invention

A power transmission apparatus that is directed to an embodying mode according to the present invention can be materialized by partially improving a power transmission apparatus into which a manual transmission is incorporated, manual transmission which serves as a multistaged change-speed mechanism (MT) that is boarded onto automobiles and that makes change-speed operations feasible by means of a driver's manual operations, for instance. And, as for the multistaged change-speed mechanism, it is possible to employ manual-type multistaged change-speed mechanisms that are automated (AMT).

### (Embodying Mode No. 1).

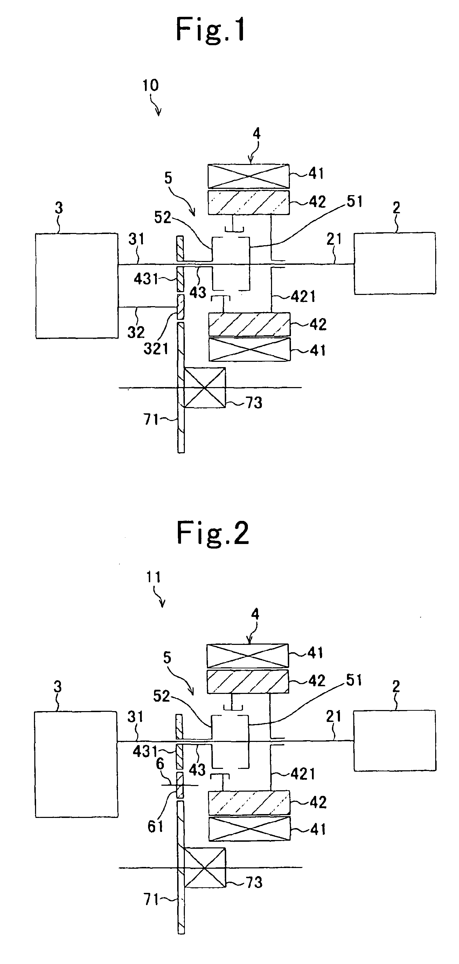

As illustrated in Fig. 1, a power transmission apparatus 10 according to Embodying Mode No. 1 comprises an internal combustion engine 2, a multistaged change-speed mechanism 3, a rotary electric device 4, a first power interrupting mechanism 51, a second power interrupting mechanism 52, and a controlling unit (not shown in the drawing). The power transmission apparatus 10 according to the present embodying mode is an apparatus for automobile onto which an internal combustion engine (not shown) is onboard in the front to drive the front wheels.

As for the internal combustion engine 2, gasoline engines or diesel engines, and the like, can be named. In Fig. 1, the internal combustion engine is positioned on the side of an input 31 of the later-described multistaged change-speed mechanism 3 (i.e., on the upstream side), is connected to the input shaft 31 coaxially, and comprises an output shaft 21 that is connected to a rotor 42 of the later-described rotary electric device 4 by way of the later-described first power interrupting mechanism 51. The internal combustion engine 2 has a fuel supplying device, throttles for controlling an air supply amount, and the like, and their fuel and air supply amounts are controlled based on control signals from the outside. The internal combustion engine 2 has a revolution-speed sensor (not shown) that senses a revolution speed of the output shaft 21 and then outputs a revolution-speed signal.

The multistaged change-speed mechanism 3 comprises the input shaft 31, and an output shaft 32; and is a gear-system multistaged change-speed mechanism that can change a rotary power, which is input from the input shaft 31, in speed with a plurality of switchable speed reducing ratios, and that can then output the resulting rotary power to the output shaft 32, and that is made of a plurality of gear-shift stages. The input shaft 31 is coupled to the output shaft 21 of the internal combustion engine 2. As the change-speed mechanism, it is possible to name those that comprise 5-speed or 6-speed gear-shift stages in the forward-travel direction, and one-staged gear-shift stage in the reverse-travel direction, for instance. The multistaged change-speed mechanism 3 is a mechanism for carrying out the selection of the gear-shift stages by means of the combinations of selecting operations and shifting operations, and has actuators (not shown) for carrying out the selecting operations and shifting operations, respectively. The actuators carry out the selection of the gear-shift stages by carrying out each of the operations based on control signals from the outside. The construction of the present multistaged change-speed mechanism 3 is similar to the construction of so-called ATM. The multistaged change-speed mechanism 3 has revolution-speed sensors that sense the revolution speeds of the input shaft 31 and output shaft 32 and then output them as revolution-speed signals.

The input shaft 31 is connected to the output shaft 21 of the internal combustion engine 2, and an output gear 321, which meshes with a final deceleration gear 71, is coupled to the output shaft 32. The final deceleration gear 71 is coupled to a differential mechanism 73, and the differential mechanism 73 is joined to right and left axels (not shown in the drawing) to which both driving wheels (not shown in the drawing) of vehicle are coupled. When the output shaft 32 rotates, the both driving wheels rotate via the output gear 321 and final deceleration gear 71 and then by way of the both of the axels from the differential mechanism 73, and thereby the vehicle travels. The input shaft 31, and the output shaft 32 are put in place parallelly to each other; the input shaft 31 is put in place coaxially with the output shaft 21 of the internal combustion engine 2 and a rotary-electric-device-side output shaft 43 of the later-described rotary electric device 4, and the input shaft 31 is put in place on an inner side of a rotor 42 of the rotary electric device 4. The input shaft 31, and the output shaft 32 are both disposed to protrude toward a side of the rotor 42 of the rotary electric device 4. By thus putting the input shaft 31 and output shaft 32 in an identical direction, it is possible to make the connection distances to the rotary electric device 4 shorter mutually. Hence, it is possible to simplify the construction because it is not necessary to provide a mechanism for transmitting a rotary power over a long distance between the rotor 4 of the rotary electric device 4, which is put in place on a side of the internal combustion engine 2 to the multistaged change-speed mechanism 3, and the output shaft 32, unlike such a case where the input shaft 31 and output shaft 32 of the multistaged change-speed mechanism 3 are provided in the opposite directions.

The rotary electric device 4 comprises a stator 41 that is positioned on the outer peripheral side and that does not rotate, and a ring-shaped rotor 42 that is positioned on an inner peripheral side of the stator 4 and that rotates. The rotor 42 is supported rotatably to the output shaft 21 by means of a rotary supporting member 421 that is positioned on an outer peripheral side of the output shaft 21 of the internal combustion engine 2, and its rotary shaft is coaxial with the output shaft 21 of the internal combustion engine 2 and the input shaft 31 of the multistaged change-speed mechanism 3. And, the rotary electric device 4 comprises a rotary-electric-device-side output shaft 43 that has a rotary-electric-device-side output gear 431 which is connected to an output gear 321 of the output shaft 32 of the multistaged change-speed mechanism 3 by way of the second power interrupting mechanism 52. The rotary-electric-device-side output gear 431 meshes with the output gear 321 of the output shaft 32 of the multistaged change-speed mechanism 3. Moreover, it is possible to adapt the rotary electric device 4 into one that has a revolution-speed sensor (not shown) for detecting a revolution speed of the rotary electric device 4 and then outputting it as a revolution-speed signal. In addition to or instead of the revolution-speed sensors for detecting the revolution speed of the output shaft 21 of the internal combustion engine 2 and those of the input shaft 31 and output shaft 32 of the multistaged change-speed mechanism 3, the revolution speed of the output shaft 21 and those of the input shaft 31 and output shaft 32 are controlled by means of controlling the revolution speed of the rotary electric device 4. Note that the rotary electric device 4 is used as an electric-power generator and as an electric motor, and is controlled by means of a rotary-electric-device controller (not shown in the drawing). Moreover, the rotary electric device 4 uses an electricity accumulator (not shown in the drawing) as the electricity source. Electricity, which has been generated electrically by means the rotary electricity device 4, is accumulated in the electricity accumulator, and its control is carried out by means of the rotary-electricity-device controller.

The first power interrupting mechanism 51 is put in place on an inner peripheral side of the rotor 42 of the rotary electric device 4, and is positioned between the rotor 42 of the rotary electric device 4 and the input shaft 31 of the multistaged change-speed mechanism 3, and is a mechanism for switching the disconnection and connection between the rotor 42 of the rotary electric device 4 and the input shaft 31 of the multistaged change-speed mechanism 3. By means of contacting and separating one of friction materials, which is coupled to a side of the input shaft 31, and the other one of the friction materials, which is coupled to a side of the rotor 42, the interruption of rotary power is carried out between both of them. The friction material, which is connected to a side of the input shaft 31, is a disk-shaped member, and is coupled slidably in the axial direction by means of a spline that is provided in the outer periphery of the input shaft 31. By means of moving this friction material in the axial direction, the interruption is carried out between itself and the friction material that is provided on a side of the rotor 42. The movements of the friction material are carried out by means of a not-shown actuator. Operations of the actuator are controlled by means of control signals from the outside.

The second power interrupting mechanism 52 is put in place on an inner peripheral side of the rotor 42 of the rotary electric device 4, and is positioned between the rotor 42 of the rotary electric device 4 and the rotary-electric-device-side output shaft 43, and is a mechanism for switching the disconnection and connection between the rotor 42 of the rotary electric device 4 and the rotary-electric-device-side output shaft 43. The rotary-electric-device-side output shaft 43 is a member that is connected rotatably to the input shaft 31, the rotary-electric-side output gear 431 is coupled to one of the opposite ends on a side of the multistaged change-speed mechanism 3, and a disk-shaped friction member is coupled to a side of the other one of the opposite ends. This frictionmember is coupled slidably in the axial direction by means of a spline that is provided in the outer periphery of the rotary-electric-device-side output shaft 43. By means of moving this friction material in the axial direction, the interruption is carried out between itself and the friction material that is provided on a side of the rotor 42. The rotary-electric-device-side output gear 431 meshes with the output gear 321 of the output shaft 32 of the multistaged change-speed mechanism 3. The movements of the friction material are carried out by means of a not-shown actuator. Operations of the actuator are controlled by means of control signals from the outside.

When switching the interrupting states between the first power interrupting mechanism 51 and the second power interrupting mechanism 52, both power interrupting mechanisms are put in the disconnected state, and then they are put in the connected state after making the revolution speed of the rotary electric device 4 coincide with the revolution speed of either one of the input shaft 31 and output shaft 32 to which they are to be connected. By doing thusly, it is possible to carry out the switching smoothly. Moreover, in a case where the first power interrupting mechanism 51 is switched from the connected state to the disconnected state and the second power interrupting mechanism 52 is switched from the disconnected state to the connected sated, or in a case where they are switched conversely, and if the internal combustion engine 2 is being driven, it is possible to avoid the sense of free running, which results from torque cut-off, by means of traveling vehicles with the internal combustion engine 2.

The controlling unit carries out the following: the control for the start and stop of the internal combustion engine 2; the control for driving of the rotary electric device 4 and regeneration; and the control for the interruption of both of the power interrupting mechanisms. It is possible to materialize the controlling unit by adding a logic, which carries out controls being given below, to an ECU that has been usually onboard in vehicle, or to an ECU with which is to be disposed in vehicle newly, or the like. The controlling unit is a device to which the following are input: revolution-speed signals that are output respectively from the internal combustion engine 2 and the multistaged change-speed mechanism 3; vehicle-speed signals that specify the speeds of vehicle onto which the present apparatus is onboard; and operation signals that specify the operation magnitudes of accelerator and brakes for operating the vehicle; and it is a device which outputs control signals to the internal combustion engine 2, to the multistaged change-speed mechanism 3, and to the first and second power interrupting mechanism 51, 52.

Next, the operations of the present power transmission apparatus 10 will be explained.

### (1) Stopping Vehicle

When a vehicle is judged to be stopped by means of a vehicle control signal, and in a case where no operations, such as operating the accelerator, are carried out, it keeps putting the internal combustion engine 2 in the stopping state. However, in a case where the electric energy that an electric accumulator accumulates electrically is a predetermined amount or less, it switches the multistaged change-speed mechanism 3 to the neutral state, the first power interrupting mechanism 51 to the connected state, and the second power interrupting mechanism 52 to the disconnected state. By means of these switching operations, the output shaft 21 of the internal combustion engine 2 is connected to the rotor 42 of the rotary electric device 4. Since the multistaged change-speed mechanism 3 is in the neutral state, the rotary power, which is input from the input shaft 31, is not transmitted to the output shaft 32. Under these circumstances, the rotary electric device 4 is rotated to start the internal combustion engine 2. It thereafter controls the revolution speed of the internal combustion engine 2, and continues to run the internal combustion engine 2 until electricity is stored in the electric accumulator in a predetermined amount or more.

### (2) Starting to Move Vehicle

In a case where it detects from operations, such as operating the accelerator, that an operator tries to start to move the vehicle, it carries out the following controls. First of all, in a case where the internal combustion engine 2 is stopped, it keeps the state as it is; and in a case where the internal combustion engine 2 is operating, it outputs a signal for stopping it.
It then outputs a signal to the multistaged change-speed mechanism 3 to put it into the neutral state. And, it outputs a control signal to the first power interrupting mechanism 51 to put it into the disconnected state, and outputs a control signal to the second power interrupting mechanism 52 to put it into the connected state. And, it outputs a signal to the rotary-electric-device controller to drive the rotary electric device 4. The rotary power from the rotary electric device 4 is transmitted from the rotary-electric-device-side output shaft 43 to the rotary-electric-device-side output gear 431 and then to the output gear 321 in this order by way of the second power interrupting mechanism 52 that is in the connected state, and then the vehicle starts moving by means of the output from the rotary electric device 4 alone.

### (3) Starting Internal Combustion Engine

After detecting that the vehicle's speed has became a predetermined speed or more by means of the vehicle-speed signal, the controlling unit carries out the starting of the internal combustion engine 2 as follows. First of all, after outputting such a signal that augments the output of the rotary electric device 4 to the rotary-electric-device controller until the internal combustion engine 2 starts, it outputs a signal, which switches the first power interrupting mechanism 51 to the connected state, to the actuator, and then outputs a signal to the internal combustion engine 2 to put it into the running state. And then, the internal combustion engine 2 is rotated by means of the rotor 42 via the first power interrupting mechanism 51, and accordingly the internal combustion engine 2 starts. Although the output from the rotary electric device 4 lowers temporarily by means of starting the internal combustion engine 2, it comes not to be detected by an operator or fellow passengers because it has been compensated by means of augmenting the output of the rotary electric device 4 during that period. After the starting of the internal combustion engine 2 is confirmed, it switches the first power interrupting mechanism 51 to the disconnected state.

### (4) Switching Gear-shift Stages in Multistaged Change-gear Mechanism

### (a) Switching from Traveling with Rotary Electric Device Alone

After starting the internal combustion engine 2, the controlling unit controls the revolution speed of the internal combustion engine 2 so as to make it coincide with a revolution speed of the input shaft 31 in one of the gear-shift stages of the multistaged change-speed mechanism 3 that coincides with the traveling speed of the vehicle (or a revolution speed of the output shaft of the multistaged change-speed mechanism 3), and outputs a signal to the multistaged change-speed mechanism 3, which is in the neutral state, to have it select one of the gear-shift stages. Thus, the rotary power of the internal combustion engine 2 is transmitted from the output shaft 21 to the input shaft 31 of the multistaged change-speed mechanism 3, is changed in speed with the speed reducing ratio of one of the gear-shift stages of themultistagedchange-speedmechanism 3, is output from the output shaft 31 of the multistaged change-speed mechanism 3, and is then transmitted to the final deceleration gear 71 by way of the output gear 321. As a result, the vehicle travels by means of driving the internal combustion engine 2. Since it has been known that the internal combustion engine 2 exhibits low fuel-consumption efficiency at low vehicle speeds such as those at the time of starting tomove, fuel-consumption improvement is intended by stopping the internal combustion engine 2 at the time of starting the vehicle to move and then starting it to move by means of the rotary electric device 4. Moreover, because of carrying out the starting of the internal combustion engine 2 with the rotary electric device 4 and employing no starter and alternator, it is possible to exclude the starter and alternator, and accordingly it is possible to reduce costs and make room in place of their spaces. In this case, it switches the second power interrupting mechanism 52 as well to the disconnected state in rotary-speed regions where the operational efficiency of the rotary electric device 4 is not high.

### (b) Control of Rotary Electric Device (Predetermined Speed or More)

In a case where the output of the rotary electric device 4 is output by way of the second power interrupting mechanism 52 when the vehicle speed becomes a predetermined speed or more, and in a case where the efficiency is inferior greatly to that of the case where the internal combustion engine 2 is used, it keeps the second power interrupting mechanism 52 in the disconnected state. In this instance, it switches the first power interrupting mechanism 51 to the connected state in a case where the revolution speed of the internal combustion engine 2 is low and falls within a revolution-speed range where the output from the rotary electric device 4 when being connected by way of the first power interrupting mechanism 51 is greater than that of the internal combustion engine 2.

Moreover, in a case where the electricity energy that has been accumulated in the electric accumulator is a predetermined amount or less, it switches the first power interrupting mechanism 51 or the second power interrupting mechanism 52 to the connected state to rotate the rotor 42 of the rotary electric device 4 , thereby carrying out electric power generation. It selects either one of the first power interrupting mechanism 51 and second power interrupting mechanism 52 to turn it into the connected state depending on which of them it turns into the connected state will result in higher electric-power-generation efficiency in the rotary electric device 4.

### (c) Control of Rotary Electric Device (Less Than Predetermined Speed)

When the vehicle speed lowers so that the vehicle speed becomes less than a predetermined speed, it keeps the second power interrupting mechanism 52 in the connected state, and thereby the output of the rotary electric device 4 is transmitted to the final deceleration gear 71 by way of the second power interrupting mechanism 52. In this case, it keeps the first power interrupting mechanism 51 in the disconnected state.

### (d) Switching under Ordinary Circumstance (With Assistance by means of Rotary Electric Device)

In a case where the vehicle speed is less than a predetermined speed, the controlling unit outputs a signal for turning the first power interrupting mechanism 51 into the disconnected state, and a signal for turning the second power interrupting mechanism 52 into the connected state, immediately before the multistaged change-speed mechanism 3 is disconnected from a current gear-shift stage. Thereafter, it disconnects the current gear-shift stage, and thereby the vehicle is traveled with the output of the rotary electric device 4. And, the controlling unit outputs a signal so as to turn the second power interrupting mechanism 52 into the disconnected state before or after the multistaged change-speed mechanism 3 is connected to the next gear-shift stage, and thereby the vehicle is traveled by means of the internal combustion engine 2. At the time of switching the gear-shift stages of the multistaged change-speed mechanism 3, it selects the next gear-shift stage after controlling the revolution speed of the internal combustion engine 2's output shaft 21 so as to be a proper revolution speed that is calculated from that of the multistaged change-speedmechanism 3' s input shaft 31 and a gear-shift stage to be selected.

### (e) Switching under Ordinary Circumstance (Without Assistance by means of Rotary Electric Device)

In a case where the vehicle speed is the predetermined speed or more, it turns the first power interrupting mechanism 51 and second power interrupting mechanism 52 into the disconnected state, respectively, at the time of disconnecting the multistaged change-speed mechanism 3 from the current gear-shift stage. At the time of switching the gear-shift stages of the multistaged change-speed mechanism 3, it selects the next gear-shift stage after controlling the revolution speed of the internal combustion engine 2's output shaft 21 so as to be a proper revolution speed that is calculated from that of the multistaged change-speed mechanism 3' s input shaft 31 and a gear-shift stage to be selected.

### (5) At the Time of Regenerating

In a case where lowering the vehicle speed is detected from operations such as operating the brakes and returning the accelerator, it switches the first power interrupting mechanism 51 or the second power interrupting mechanism 52 to the connected state to rotate the rotor 42 of the rotary electric device 4, thereby carrying out electric power generation. It selects either one of the first power interrupting mechanism 51 and second power interrupting mechanism 52 to turn it into the connected state depending on which of them it turns into the connected state will result in higher electric-power-generation efficiency in the rotary electric device 4.

On this occasion, it turns the multistaged change-speed mechanism 3 into the neutral state, and then eliminates the influence of internal combustion engine (i.e., engine braking), and thereby it is possible to augment the electric-power-generation (or regeneration) efficiency in the rotary electric device 4.

### (Operations and Advantageous Effects of Embodying Mode No. 1)

In accordance with the power transmission apparatus 10 according to present Embodying Mode No. 1, it is possible to connect the rotary electric device 4 to a side of the input shaft 31 of the multistaged change-speed mechanism 3 (i.e., an upstream side) and to a side of the output shaft 32 (i.e., a downstream side) by switching the state of the first power interrupting mechanism 51 and second power interrupting mechanism 52 between the connection and the disconnection. That is, it is possible to have such a characteristic that the rotary electric device 4 is put in place on both of the upstream side and downstream side of the multistaged change-speed mechanism 3. By putting it in place on the upstream side, it is possible to start the internal combustion engine 2 using the rotary electric device 4, and it is possible to utilize the rotary electric device 4 for generating electric power using the internal combustion engine 2. Moreover, by putting it in place on the downstream side, it is possible to drive the vehicle using the rotary electric device 4, and it is possible to utilize the rotary electric device 4 for regeneration at the time of braking the vehicle. Hence, the improvement of fuel-consumption performance, which is obtainable in a case where the rotary electric device 4 is put in place, not on one of the upstream and downstream sides of the multistaged change-speed mechanism 3, but on both of them, becomes feasible. Moreover, at the time of traveling with the internal combustion engine 2 that is exhibiting good efficiency, it is possible to turn off the rotation of the rotary electric device 4 and then avoid the loss of electricity power as well by putting both of the first power interrupting mechanism 51 and second power interrupting mechanism 52 into the disconnected state, respectively.

And, since it is possible to assume the electric power generation and the starting of the internal combustion engine 2 with the rotary electric device 4, it is possible to suppress adapting the starter and alternator into those that are of high capacity and result in increased cost.

Moreover, even when the rotary electric device 4 is added and then two power interrupting mechanisms 51, 52 are added furthermore, it is possible to suppress the increase of the overall length as a whole because the power interrupting mechanisms 51, 52 are put in place on the inner side of the rotary electric device 4.

Further, the overall length is not increased at all by putting the rotary electric device 4 in place at a position where an ordinary clutch is put in place, namely, between the internal combustion engine 2 and the multistaged change-speed mechanism 3, for instance, and then putting the first power interrupting mechanism 51 and second power interrupting mechanism 51 in place on the inner peripheral side of the rotary electric device 4.

### (Embodying Mode No. 2)

Embodying Mode No. 2 according to the present invention will be explained in detail. Present Embodying Mode No. 2 comprises the same constructions as those of Embodying Mode No. 1 basically, and exhibits the same operations and advantageous effects as it does basically. Hereinafter, it will be explained while focusing on distinct parts.

In a power transmission apparatus 11 according to present Embodying Mode No. 2, the rotary power of a rotary electric device 4 is transmitted from a rotary-electric-device-side output gear 431 to a final deceleration gear 71 by way of a transmission gear 61 of an additional shaft 6, as illustrated in Fig. 2. The additional shaft 6 is put in place parallelly to an input shaft 31 and output shaft 32 of a multistaged change-speed mechanism 3, and to an output shaft 21 of an internal combustion engine 2, and is put in place on a side of a rotor 42 of a rotary electric device 4 along with the input shaft 31. By means of thus adding a shaft and adding a gear, like the transmission gear 61, down to the final deceleration gear 71, the degree of freedom in gear ratio is increased. And, by means of the gear of the additional shaft, it is possible to adjust the rotary direction of the rotary power from the rotary electric device 4, and to adjust the rotary direction of the rotary power that is effected by way of multistaged change-speed mechanism 3.

### (Embodying Mode No. 3)

Embodying Mode No. 3 according to the present invention will be explained in detail. Present Embodying Mode No. 3 comprises the same constructions as those of Embodying Mode No. 1 basically, and exhibits the same operations and advantageous effects as it does basically. Hereinafter, it will be explained while focusing on distinct parts.

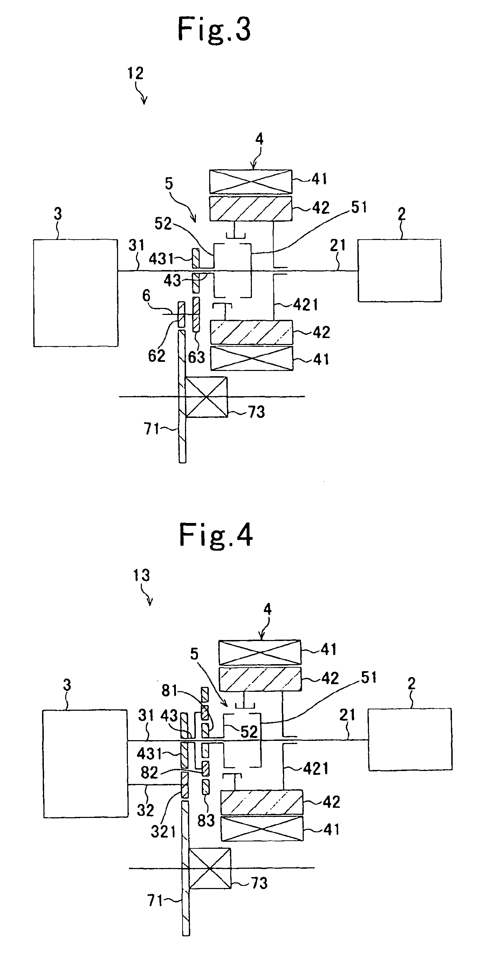

As illustrated in Fig. 3, a power transmission apparatus 12 according to present Embodying Mode No. 2 comprises an additional shaft 6 that is put in place parallelly to an input shaft 31 and output shaft 32 of a multistaged change-speed mechanism 3, and to an input shaft 21 of an internal combustion engine 2; and two transmission gears 62, 63 are put in place on the additional shaft 6. The additional shaft 6 is put in place on a side of a rotor 42 of a rotary electric device 4. One of the transmission gears 62, 63, namely, the transmission gear 63, meshes with a rotary-electric-device-side output gear 431 of a rotary-electric-device-side output shaft 43; and the other one of them, namely, the transmission gear 62, meshes with a final deceleration gear 71. Since it is possible to adjust the rotary direction of the output of the rotary electric device 4 by adding a shaft and interposing gears, it is possible to make it coincide with the rotary direction of the rotary power that is effected by way of the multistaged change-speed mechanism 3. And, by means of multiplying the number of gears on the additional shaft 6, the degree of freedom in gear ratio is increased more than that in the power transmission apparatus according Embodying Mode No. 2.

### (Embodying Mode No. 4)

Embodying Mode No. 4 according to the present invention will be explained in detail. Present Embodying Mode No. 4 comprises the same constructions as those of Embodying Mode No. 1 basically, and exhibits the same operations and advantageous effects as it does basically. Hereinafter, it will be explained while focusing on distinct parts.

In a power transmission apparatus 13 according to present Embodying Mode No. 4, the rotary center of a sun gear 81 of a planetary gear mechanism 8 is put in place coaxially with the shaft of a rotor 42 of a rotary electric device 4, an input shaft 31 of a multistaged change-speed mechanism 3 and an output shaft 21 of an internal combustion engine 2, as illustrated in Fig. 4. The planetary gear mechanism 8 comprises the sun gear 81, which is connected to the rotor 42 of the rotary electric device 4 by way of a second power interrupting mechanism 52, a planetary gear 82, which is connected to a rotary-electric-device-side output shaft 43, and a ring gear 83, which is fixed so as to be unable to rotate. And, it is feasible to put the planetary gear mechanism 8 on an inner peripheral side of the rotor 42. By means of using the planetary gear mechanism 8, the degree of freedom in gear ratio is increased more in the present power transmission apparatus 13 than that in the power transmission apparatus 12 according to Embodying Mode No. 3 with the construction in which a shaft is added and the transmission gear is multiplied.

### (Embodying Mode No. 5)

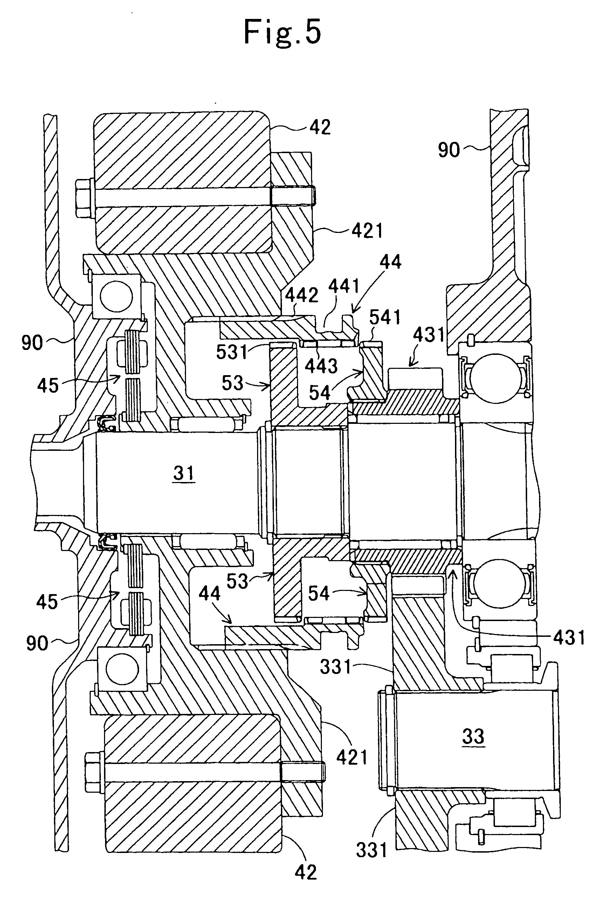

A power transmission apparatus according to Embodying Mode No. 5 of the present invention comprises the same constructions as those of the power transmission apparatuses 10-13 according to Embodying Mode No. 1 through Embodying Mode No. 4 basically, and exhibits the same operations and advantageous effects as they do basically. Hereinafter, it will be explained while focusing on distinct parts. As illustrated in Fig. 5, in the power transmission apparatus according to Embodying Mode No. 5, the constructions of a first power interrupting mechanism 53 and second power interrupting mechanism 54 differ from those of the first power interrupting mechanism 51 and second power interrupting mechanism 52 according to Embodying Mode No. 1 through Embodying Mode No. 4. Fig. 5 is an explanatory diagram in which the distinct parts are enlarged.

In Fig. 5, an internal combustion engine 2 is positioned leftward to an input shaft 31. And, an opposite end of a counter shaft 33 (or an output shaft 32) is drawn under the input shaft 31. A rotor 42 of a rotary electric device 4 is supported rotatably to the input shaft 31 by a rotary supporting member 421 that is positioned on an outer peripheral side of the input shaft 31, and a stator 41 is positioned on an outer peripheral side of the rotor 42. And, the rotary electric device 4 comprises a sleeve 44 that engages with the rotor 42 not only integrally and rotatably but also movably in the axial direction. In the sleeve 44, a spline, which engages with an inner peripheral side of the rotor 42, is formed in an axial part on the outer peripheral side, and a groove 441 is formed in the remaining axial part on the outer peripheral side. The sleeve 44 is moved axially by way of a not-shown fork by means of driving an actuator because the fork engages with the groove 441. Moreover, the rotary electric device 4 comprises a rotary sensor 45 for detecting a revolution speed of the rotary electric device 4 so as to make the revolution speed of the rotary electric device 4 controllable. For example, in Fig. 5, it is installed between the rotary supporting member 421 and a case 90 that is positioned leftward in the drawing.

The first power interrupting mechanism 53 engages with the input shaft 31 integrally and rotatably on an inner peripheral side of the rotor 42, because engager teeth 531 that engage with engager teeth 422 on the inner periphery of the sleeve 44 are formed on the outer periphery. The second power interrupting mechanism 54 is positioned on an inner peripheral side of the rotor 2, and engages integrally and rotatably with a rotary-electric-device-side output gear 431 that engages rotatably with the input shaft 31, because engager teeth 541 that engage with engager teeth 442 on the inner periphery of the sleeve 44 are formed on the outer periphery. The rotary-electric-device-side output gear 431 meshes always with an output gear 321, which engages with the output shaft 32 integrally and rotatably at an opposite end of the output shaft 32, because teeth are formed on the outer periphery of the rotary-electric-device-side output gear 431.

The first power interrupting mechanism 53 is positioned more adjacently to a side of the internal combustion engine 2 in the axial direction than is the second power interrupting mechanism 54. Hence, when the sleeve 44 moves toward one of the sides of the internal combustion engine 2, it engages with the first power interrupting mechanism 53; when it moves toward the other one of the sides, it engages with the second power interrupting mechanism 54; accordingly the interruptions are switched. Moreover, it is possible to put it into such a state that it does not engages with either one of the power interrupting mechanisms, because the engager teeth 443 of the sleeve 44 have a length that is shorter than the axial distance between the engager teeth 531 of the first power interrupting mechanism 53 and the engager teeth 541 of the second interrupting mechanism 54.

### (Embodying Mode No. 6)

A power transmission apparatus according to Embodying Mode No. 6 of the present invention comprises the same constructions as those of the power transmission apparatuses 10-13 according to Embodying Mode No. 1 through Embodying Mode No. 4 and the power transmission apparatus according to Embodying Mode No. 5 basically, and exhibits the same operations and advantageous effects as they do basically. Hereinafter, it will be explained while focusing on distinct parts.

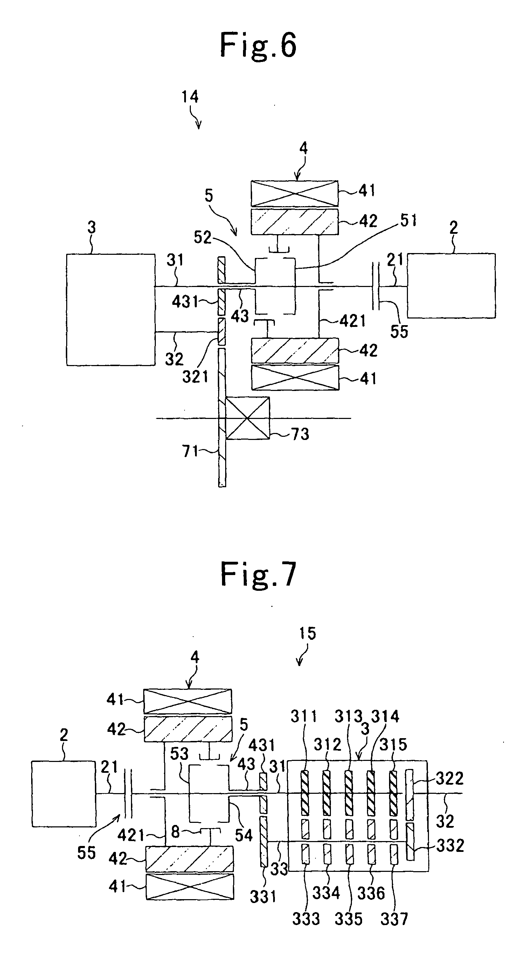

In the power transmission apparatus 14 according to present Embodying Mode No. 6, a clutch 55 that is ordinary (hereinafter, referred to as an ordinary clutch) is put in place between an output shaft 21 of an internal combustion engine 2 and a rotor 42 of a rotary electric device 42 (or an input shaft 31 of a multistaged change-speed mechanism 3, as illustrated in Fig. 6. (The power transmission apparatus 14 being shown in Fig. 6 is one in which the ordinary clutch 55 is added between the output shaft 21 and the rotor 42 in the power transmission apparatus 10 according to Embodying Mode No. 1. Since it can be likewise put in place in the power transmission apparatuses 11-13 according to Embodying Mode Nos. 2-4 as well, its diagrammatic representation is omitted.) The ordinary clutch 55 switches the disconnection and connection between the output shaft 21 and the input shaft 31. The operations of this ordinary clutch 55 are controlled by means of a controlling unit through an actuator.

Next, the operations of the power transmission apparatus 14 according to Embodying Mode No. 6 will be explained.

### (1) Stopping Vehicle

When a vehicle is judged to be stopped by means of a vehicle control signal, and in a case where no operations, such as operating the accelerator, are carried out, it keeps putting the internal combustion engine 2 in the stopping state. However, in a case where the electric energy that an electric accumulator accumulates electrically is a predetermined amount or less, it switches the multistaged change-speed mechanism 3 to the neutral state, the first power interrupting mechanism 51 to the connected state, and the second power interrupting mechanism 52 to the disconnected state. By means of these switching operations, the output shaft 21 of the internal combustion engine 2 is connected to the rotor 42 of the rotary electric device 4. Since the multistaged change-speed mechanism 3 is in the neutral state, the rotary power, which is input from the input shaft 31, is not transmitted to the output shaft 32. Under these circumstances, it puts the ordinary clutch 55 into the connected state, and then rotates the rotary electric device 4 to start the internal combustion engine 2. It thereafter controls the revolution speed of the internal combustion engine 2, and continues to run the internal combustion engine 2 until electricity is stored in the electric accumulator in a predetermined amount or more.

### (2) Starting to Move Vehicle

In a case where it detects from operations, such as operating the accelerator, that an operator tries to start to move the vehicle, it carries out the following controls. First of all, in a case where the internal combustion engine 2 is stopped, the controlling unit keeps the state as it is; in a case where the internal combustion engine 2 is operating, it outputs a signal for stopping the internal combustion engine 2. And, in a case where the ordinary clutch 55 is in the disconnected state, the controlling unit keeps the state as it is; in a case where the ordinary clutch 55 is in the connected state, it outputs a signal for disconnecting the ordinary clutch 55.

### (a) Where Multistaged Change-speed Apparatus is put into the Neutral State

The controlling unit outputs a signal to the multistaged change-speed mechanism 3 to put it into the neutral state. And, it outputs a control signal to the first power interrupting mechanism 51 to put it into the disconnected state, and outputs a control signal to the second power interrupting mechanism 52 to put it into he connected state. And, it outputs a signal to the rotary-electric-device controller to drive the rotary electric device 4. The rotary power from the rotary electric device 4 is transmitted from the rotary-electric-device-side output shaft 43 to the rotary-electric-device-side output gear 431 and then to the output gear 321 in this order by way of the second power interrupting mechanism 52 that is in the connected state, and then the vehicle starts moving by means of the output from the rotary electric device 4 alone.

### (B) Where Multistaged Change-speed Mechanism is put into the State in which one of Gear-shift Stages is Selected

The controlling unit outputs a signal to the multistaged change-speed mechanism 3 to select an appropriate gear-shift stage. And, it outputs a control signal to the first power interrupting mechanism 51 to put it into the connected state, and outputs a control signal to the second power interrupting mechanism 52 to put it into the disconnected state. Then, the controlling unit outputs a signal to the rotary-electric-device controller to drive the rotary electric device 4. The rotary power from the rotary electric device 4 is transmitted from the rotary-electric-device-side output shaft 43 to the input shaft 31 by way of the first power interrupting mechanism 51 that is in the connected state, is changed in speed with a speed-reducing ratio of the gear-shift stage in the multistaged change-speed mechanism 3, and is then output from the output shaft 32 of the multistaged change-speed mechanism 3. And, it is transmitted to the final gear 71 via the output gear 321 by means of the output of the output shaft 32, and then the vehicle starts moving by means of the output from the rotary electric device 4 alone.

### (3) Starting Internal Combustion Engine

After detecting that the vehicle's speed has became a predetermined speed or more by means of the vehicle-speed signal, the controlling unit carries out the starting of the internal combustion engine 2 as follows.

### (a) Where being Started Moving with Multistaged Change-speed Mechanism that is in Neutral State

First of all, the controlling unit outputs a control signal to the ordinary clutch 55 to switch it to the connected state. And, after outputting such a signal that augments the output of the rotary electric device 4 to the rotary-electric-device controller until the internal combustion engine 2 starts, it outputs a signal, which switches the first power interrupting mechanism 51 to the connected state, to the actuator, and then outputs a signal to the internal combustion engine 2 to put it into the running state. And then, the internal combustion engine 2 is rotated by means of the rotor 42 via the first power interrupting mechanism 51, and accordingly the internal combustion engine 2 starts. Although the output from the rotary electric device 4 lowers temporarily by means of starting the internal combustion engine 2, it comes not to be detected by an operator or fellow passengers because it has been compensated by means of augmenting the output of the rotary electric device 4 during that period. After the starting of the internal combustion engine 2 is confirmed, it switches the first power interrupting mechanism 51 to the disconnected state.

### (b) In Case of being Started Moving with Multistaged Change-speed Mechanism that is in the State of one of Selecting Gear-shift Stages

### (b-1) In Case of Employing Starter or Alternator etc. for Starting Internal Combustion Engine

The controlling unit outputs a signal that puts the internal combustion engine 2 into the running state with a starter or alternator, and the like. And, the controlling unit outputs a signal, which switches the ordinary clutch 55 to the connected state, after the internal combustion engine 2 is started. It then switches the first power interrupting mechanism 51 to the disconnected state after connecting the ordinary clutch 55.

### (b-2) In Case of Employing Neither Starter nor Alternator etc. for Starting Internal Combustion Engine

First of all, the controlling unit outputs such a signal, which augments the output of the rotary electric device 4, to the rotary-electric-device controller until the internal combustion engine 2 starts. And, it outputs a signal, which puts the internal combustion engine 2 into the running state, and then outputs a signal, which switches the ordinary clutch 55 to the connected state. And then, the internal combustion engine 2 is rotated by means of the rotor 42 via the first power interrupting mechanism 51, and thereby the internal combustion engine 2 starts. Although the output from the rotary electric device 4 lowers temporarily by means of starting the internal combustion engine 2, it comes not to be detected by an operator or fellow passengers because it has been compensated by means of augmenting the output of the rotary electric device 4 during that period. After the starting of the internal combustion engine 2 is confirmed, it switches the first power interrupting mechanism 51 to the disconnected state.

### (4) Switching Gear-shift Stages in Multistaged Change-speed Mechanism

### (a) Switching from Traveling with Rotary Electric Device Alone (In Case of being (a) of (3))

After starting the internal combustion engine 2, the controlling unit controls the revolution speed of the internal combustion engine 2 so as to make it coincide with a revolution speed of the input shaft 31 in one of the gear-shift stages in the multistaged change-speed mechanism 3 that coincides with the traveling speed of the vehicle (or a revolution speed of the output shaft 32 of the multistaged change-speed mechanism 3). And, it outputs a signal to the multistaged change-speed mechanism 3 to have it select one of the gear-shift stages.

### (b) Switching under Ordinary Circumstance (With Assistance by means of Rotary Electric Device)

The controlling unit outputs a signal for turning the first power interrupting mechanism 51 into the disconnected state, and a signal for turning the second power interrupting mechanism 52 into the connected state, immediately before the ordinary clutch 55 is disconnected. Thereafter, it disconnects a current gear-shift stage, and thereby the vehicle is traveled with the output of the rotary electric device 4. And, the controlling unit outputs a signal so as to turn the second power interrupting mechanism 52 into the disconnected state before or after the multistaged change-speed mechanism 3 is connected to the next gear-shift stage and the ordinary clutch 55 is connected, and thereby the vehicle is traveled by means of the internal combustion engine 2. When connecting the ordinary clutch 55, it controls the revolution speed of the internal combustion engine 2's output shaft 21 so as to be a proper revolution speed that is calculated from that of themultistagedchange-speedmechanism 3' s input shaft 31 and a gear-shift stage to be selected, and thereby the connection of the ordinary clutch 55 is carried out smoothly. Alternatively, it is also feasible to alter the capacity of the ordinary clutch 55 to a smaller one.

### (c) Switching under Ordinary Circumstance (Without Assistance by means of Rotary Electric Device)

The controlling unit outputs a signal for selecting a next gear-shift stage from the current gear-shift stage after disconnecting the ordinary clutch 55. When connecting the ordinary clutch 55, it controls the revolution speed of the internal combustion engine 2's output shaft 21 so as to be a proper revolution speed that is calculated from that of themultistaged change-speedmechanism 3' s input shaft 31 and a gear-shift stage to be selected, and thereby the connection of the ordinary clutch 55 is carried out smoothly. Alternatively, it is also feasible to alter the capacity of the ordinary clutch 55 to a smaller one.

### (5) At the Time of Regenerating

In a case where lowering the vehicle speed is detected from operations such as operating the brakes and returning the accelerator, it switches the first power interrupting mechanism 51 or the second power interrupting mechanism 52 to the connected state to rotate the rotor 42 of the rotary electric device 4, thereby carrying out electric power generation. It selects either one of the first power interrupting mechanism 51 and second power interrupting mechanism 52 to turn it into the connected state depending on which of them it turns into the connected state will result in higher electric-power-generation efficiency in the rotary electric device 4.

On this occasion, it turns the multistaged change-speed mechanism 3 into the neutral state, or shifts the gear-shift stage in the multistaged change-speed mechanism 3 into an appropriate one while keeping the ordinary clutch 55 in the disconnected state, and then eliminates the influence of the internal combustion engine 2 (i.e., engine braking), and thereby it is possible to augment the electric-power-generation (or regeneration) efficiency in the rotary electric device 4.

### (6) Electric Power Generation during Traveling

In a case where the electric energy that has been stored in the electricity accumulator is a predetermined amount or less, it switches the first power interrupting mechanism 51 or the second power interrupting mechanism 52 to the connected state to rotate the rotor 42 of the rotary electric device 4, thereby carrying out electric power generation. It selects either one of the first power interrupting mechanism 51 and second power interrupting mechanism 52 to turn it into the connected state depending on which of them it turns into the connected state will result in higher electric-power-generation efficiency in the rotary electric device 4.

### (Embodying Mode No. 7)

A power transmission apparatus 15 according to present Embodying Mode No. 7 comprises the same constructions as those of the power transmission apparatuses 10-14 according to Embodying Mode No. 1 through Embodying Mode No. 5 basically, and exhibits the same operations and advantageous effects as they do basically. Hereinafter, it will be explained while focusing on distinct parts.

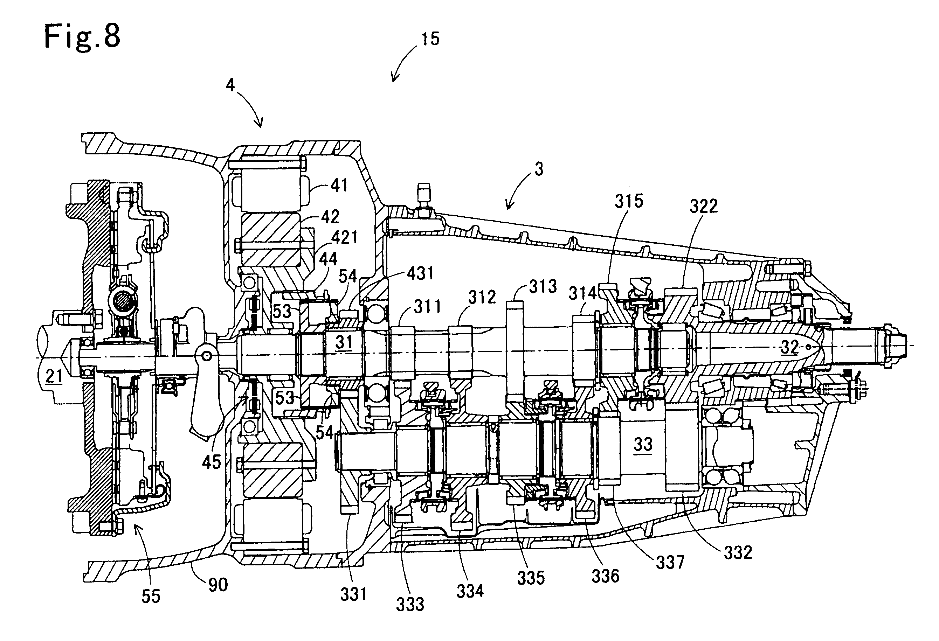

As illustrated in Fig. 7 and Fig. 8, the power transmission apparatus 15 according to present Embodying Mode No. 7 comprises an internal combustion engine 2, a multistaged change-speed mechanism 3, and a rotary electric device 4, a first power interrupting mechanism 53, a second power interrupting mechanism 54, an ordinary clutch 55, and a controlling unit (not shown in the drawings). The power transmission apparatus 15 according to the present embodying mode is an apparatus for automobile (not shown) in which the internal combustion engine is mounted in the front and the rear wheels are driven.

In Fig. 7, the internal combustion engine is positioned on a side of the multistaged change-speed mechanism 3's input shaft 31 (or on the upstream side), and comprises an output shaft 21 that is connected to the input shaft 30 coaxially and is connected to a rotor 42 of the later-described rotary electric device 4 by way of the first power interrupting mechanism 53. The internal combustion engine 2 has a fuel supplying device, a throttle for controlling the amount of air supply, and the like; and these are controlled based on control signals from the outside so that their fuel-supply and air-supply amounts are controlled. The internal combustion engine 2 has a revolution-speed sensor (not shown) that detects a revolution speed of the output shaft 21 and then outputs a revolution-speed signal.

The multistaged change-speed mechanism 3 comprises the input shaft 31, an output shaft 32, and a counter shaft 33; and is a gear-system multistaged change-speed mechanism that is constituted of a plurality of gear-shift stages which can change a rotary power that is input from the input shaft 31 in speed with a plurality of switchable speed reducing ratios, and which can then output it from the output shaft 32. The input shaft 31 is coupled to an output shaft 21 of the internal combustion engine 2 by way of the ordinary clutch 55. As the change-speed mechanism, it is possible to name those comprising gear-shift stages for 5 speeds or 6 speeds in the forward direction, and one-staged gear-shift stage in the reverse direction. The multistaged change-speed mechanism 3 is a mechanism that carries out the selection of the gear-shift stages by means of the combinations of selecting operations and shifting operations; and has actuators (not shown) that carry out the selecting operations and the shifting operations, respectively. The actuators carry out the selections of the gear-shift stages by carrying out the respective operations based on control signals from the outside. The construction of the present multistaged change-speed mechanism 3 is similar to the construction of automatic MT. The multistaged change-speed mechanism 3 has revolution-speed sensors (not shown) that detect the revolution speeds of the input and output shafts 32 and 32, and that then output them as revolution-speed signals.

The output shaft 32 is put in place coaxially with the input shaft 31, the output shaft 21 of the internal combustion engine 2, and a rotary-electric-device-side output shaft 43 of the rotary electric device 4. The output shaft 32 is disposed to protrude from a side, which is opposite to an opposite end side where the input shaft 31 is coupled to the output shaft 21 of the internal combustion engine 2 in the axial direction, toward the outside of the multistaged change-speed mechanism 3. On the output shaft 32, an output gear 322, which meshes with a driven gear 332 of the later-described counter shaft 33, is put in place integrally and rotatably at one of the opposite ends on a side of the input shaft 31. A gear (not shown in the drawings) of a differential mechanism (not shown in the drawings), which is to be joined to both driving wheels (not shown in the drawings) of vehicle, is joined to the other one of the opposite end sides of the output shaft 32.

The counter shaft 33 is put in place parallelly to the input shaft 31 in the axial direction; and comprises a rotary-electric-device-side input gear 331 being disposed at one of the opposite ends on a side of the internal combustion engine 2, the driven gear 332 being disposed at the other one of the opposite end sides, and a plurality of counter gears 333-337 being disposed between the rotary-electric-device-side input gear 331 and the driven gear 322. The rotary-electric-device-side input gear 331 is capable of rotating integrally with the counter shaft 33, and meshes always with a rotary-electric-device-side output gear of the rotary electric device 4. The driven gear 322 is capable of rotating integrally with the counter shaft 33, and meshes always with the output gear 322 of the output shaft 32. The counter gears 333-337 mesh always with drive gears 311-314 that are disposed on the input shaft 31 integrally and rotatably, and with a drive gear 315 that is disposed on the input shaft 31 integrally and rotatably. The meshing counter gears and drive gears correspond to the respective gear-shift stages of vehicle.

The rotary electric device 4 comprises a stator 41 that is positioned on the outer peripheral side and does not rotate, and the ring-shaped rotor 42 that is positioned on the inner peripheral side of the stator 41 and rotates. The rotor 42 is supported rotatably to the input shaft 31 by a rotary supporting member 421 that is positioned on the outer peripheral side of the input shaft 31 of the multistaged change-speed mechanism 3, and its rotary shaft is coaxial with the output shaft 21 of the internal combustion engine 2, and with the input shaft 31 of the multistaged change-speed mechanism 3. And, a rotary-electric-device-side output gear 431, which meshes with the rotary-electric-device-side input gear 331 of the counter shaft 33 is supported rotatably to and removably from the input shaft 31 on the outer peripheral side of the input shaft 31 in order to transmit the output of the rotary electric device 4 to the side of the output shaft 32, and is molded integrally with a rotary-electric-device-side output shaft 43. And, the rotary electric device 4 comprises a sleeve 44 that is capable of rotating integrally with the rotor 42 and engages with it movably in the axial direction. On the sleeve 44, a spline is formed, spline whose outer-peripheral-side axial part engages with the inner peripheral side of the rotor 42, and a groove 441 is formed on the outer-peripheral-side axial remaining part. A not-shown fork engages with the groove 441, and then the sleeve 44 moves in the axial direction via the fork by means of driving an actuator. Moreover, the rotary electric device 4 comprises a rotary sensor 45 that detect a revolution speed of the rotary electric device 4 to output it as a revolution-speed signal. In addition to revolution-speed sensors that detect the revolution speeds of the internal combustion engine 2's output shaft 21 and the revolution speeds of the multistaged change-speed mechanism 3' s input and output shafts 31, 32, or instead of them, the revolution speed of the output shaft 21, and the revolution speeds of the input and output shafts 31, 32 are controlled by controlling the revolution speed of the rotary electric device 4. Note that the rotary electricity device 4 is used as an electricity generator as well as an electric motor, and is controlled by means of a rotary-electric-device controller (not shown in the drawings). Moreover, an electric accumulator (not shown in the drawings) is an electric power source for the rotary electric device 4. The electricity that has been generated electrically by means of the rotary electric device 4 is accumulated electrically in the electric accumulator, and its control is carried out by means of the rotary-electric-device controller.

On the outer periphery of the first power interrupting mechanism 53, engager teeth 531 are formed, engager teeth 531 which engage with the sleeve 44's inner-peripheral engager teeth 442 and engage with the input shaft 31 integrally and rotatably on the inner peripheral side of the rotor 42. On the outer periphery of the second power interrupting mechanism 54, engager teeth 541 are formed, engager teeth 541 which engage with the rotary-electric-deice-side output gear 431 integrally and rotatably, rotary-electric-deice-side output gear 431 which is positioned on the inner peripheral side of the rotor 2 and which engages with the input shaft 31 rotatably. The rotary-electric-device-side output gear 431 meshes always with a rotary-electric-device-side input gear 331 that engages with the output shaft 32 integrally and rotatably at one of the opposite ends of the output shaft 32. The first power interrupting mechanism 53 is positioned more adjacently to one of the sides of the internal combustion engine 2 in the axial direction than is the second power interrupting mechanism 54. Hence, the sleeve 44 engages with the first power interrupting mechanism 53 when it moves toward one of the sides of the internal combustion engine 2; it engages with the second power interrupting mechanism 54 when it moves toward the other one of the sides; and thereby the interruptions are switched. Moreover, it is possible to put the sleeve 44 into such a state that it does not engage with either one of the power interrupting mechanisms, because the engager teeth 443 of the sleeve 44 have an axial length that is shorter than the axial length between the engager teeth 531 of the first power interrupting mechanism 53 and the engager teeth 541 of the second power interrupting mechanism 54.

The controlling unit carries out the control for the start and stop of the internal combustion engine 2, the control for the driving of the rotary electric device 4 and the regeneration, and the control for the interruption of both power interrupting mechanisms. The controlling unit can be materialized by adding a logic that carries out controls as set forth below to ECU, which has been usually onboard in vehicle, or to ECU, which is to be disposed in vehicle newly, or the like. The controlling unit is a device to which the following are input: the revolution-speed signals that are output respectively from the internal combustion engine 2 and multistaged change-speed mechanism 3; vehicle-speed signals that specify speeds of the vehicle in which the present apparatus is onboard; and operational signals that specify the operated magnitudes of the accelerator and brakes for operating vehicle; and it is a device which outputs control signals to the internal combustion engine 2, to the multistaged change-speed mechanism 3, and to the first and second power interrupting mechanisms 53, 54.

Basic operations of the power transmission apparatus 15 according to present Embodying Mode No. 7 are the same as the operations of the power transmission apparatus 14 according to Embodying Mode No. 5, and exhibits advantageous effects that are similar to the advantageous effects of that. Moreover, basic operations and advantageous effects where the ordinary clutch 55 according to the present power transmission apparatus 15 is removed are similar to the operations and advantageous effects of the power transmission apparatuses 10-13 according to Embodying Mode Nos. 1-4.

And, in a change-speed machine for so-called output reduction type FR, like the present power transmission apparatus 15, in which the internal combustion engine 2 is onboard in the front and the rear wheels are driven, since it is possible to materialize the power transmission apparatus according to the present invention by adding the rotary electric device 4, the first power interrupting mechanism 53, the second power interrupting mechanism 54 and some gears between the internal combustion engine 2 and the multistaged change-speed mechanism 3, it is possible to deal with it without ever altering the multistaged change-speed mechanism 3, and it is possible to keep down costs as well.

### (Embodying Mode No. 8)

A power transmission apparatus 16 according present Embodying Mode No. 8 comprises the same constructions as those of the power transmission apparatus 15 according to Embodying Mode No. 7 basically, and exhibits the same operations and advantageous effects as it does basically. Hereinafter, it will be explained while focusing on distinct parts.

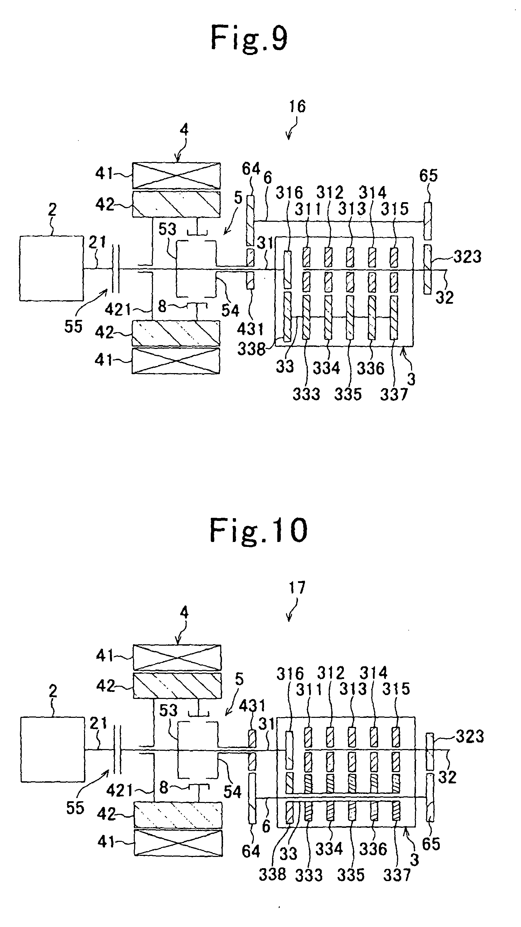

The power transmission apparatus 16 according to present Embodying Mode No. 8 is an apparatus for automobile (not shown) in which the internal combustion engine is mounted in the front and the rear wheels are driven; an input shaft 31 of a multistaged change-speed mechanism 3 is reduced, and an output shaft 32 thereof is extended, as illustrated in Fig. 9. Drive gears 311-315, which mesh always with counter gears 333-337 of a counter shaft, are supported rotatably to the output shaft 32. And, it comprises an additional shaft 6 that is put in place parallelly to the input shaft 31, output shaft 32 and counter shaft 33.

The input shaft 31 comprises an input gear 316 at an opposite end on the side of the output shaft 32 in the axial direction. The input gear 31 meshes always with a counter-shaft-side input gear 338 of the counter shaft that is put in place parallelly to the input shaft 31.

To the output shaft 32, the drive gears 311-314, which mesh always with the counter gears 333-337 of the counter shaft 33, are supportedrotatably. An additional-shaft-side input gear 323, which meshes with a transmission gear 65 of a later-described additional shaft 6 is supported rotatably to the output shaft 32 and integrably with the output shaft 32.

The additional shaft 6 comprises a transmission gear 64 at one of the opposite ends, transmission gear 64 which meshes always with a rotary-electric-device-side output gear 431 of a rotary electric device 4 at one of the opposite ends on the side of the internal combustion engine 2, and a transmission gear 65 at the other one of the opposite ends, transmission gear 65 which meshes always with the additional-shaft-side input gear 323 that is supported rotatably to the output shaft 32.

In the power transmission apparatus 16 according to present Embodying Mode No. 8 where the rotary electric device 4 is connected to the side of the output shaft 32 of the multistaged change-speed mechanism 3 (or to the downstream side), the second power interrupting mechanism 54 is in the connected state, the rotary-electric-device-side 431 rotates to transmit the power to the transmission gear 64 of the additional shaft 6. And, the power is transmitted from the transmission gear 65 of the additional shaft 6 to the additional-shaft-side input gear 323 of the output shaft 32, and is then transmitted to the wheels.

The present power transmission apparatus 16 according to present Embodying Mode No. 8 is a so-called input reduction type change-speed machine. It becomes feasible to connect the rotary electric device 4 to either one of the side of the input shaft 31 of the multistaged change-speed mechanism 3 and the side of the output shaft 32 by adding one extra shaft and some gears to an existing change-speed machine with such a construction.

### (Embodying Mode No. 9)

A power transmission apparatus 17 according present Embodying Mode No. 9 comprises the same constructions as those of the power transmission apparatus 16 according to Embodying Mode No . 8 basically, and exhibits the same operations and advantageous effects as it does basically. Hereinafter, it will be explained while focusing on distinct parts.

As illustrated in Fig. 10, the power transmission apparatus 17 according to present Embodying Mode No. 9 is an automobile in which an internal combustion engine 2 is onboard in the vehicular front and the rear wheels are driven in the same manner as the power transmission apparatus 16 according to Embodying Mode No. 8, and in which an input reduction type change-speed machine is employed. In the present power transmission apparatus 17, a cylindrical shaft is used for a counter shaft 33, and an additional shaft 6 is penetrated through the inside of the counter shaft 33. Since it is possible to add the additional shaft 6 by thus adapting the counter shaft 33 into a cylindrical shape, the expansion in the shaft's diametric direction is suppressed, compared with the power transmission apparatus 16 according to Embodying Mode No. 8.

### (Embodying Mode No. 10)

A power transmission apparatus 18 according present Embodying Mode No. 10 comprises the same constructions as those of the power transmission apparatus 16 according to Embodying Mode No. 8 basically, and exhibits the same operations and advantageous effects as it does basically. Hereinafter, it will be explained while focusing on distinct parts.

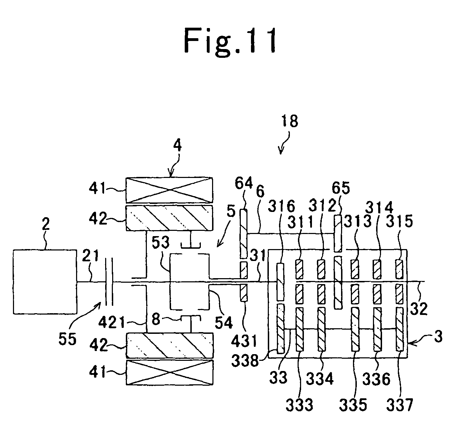

As illustrated in Fig. 11, the power transmission apparatus 18 according to present Embodying Mode No. 10 is an automobile in which an internal combustion engine 2 is onboard in the vehicular front and the rear wheels are driven in the same manner as the power transmission apparatus 16 according to Embodying Mode No. 8, and in which an input reduction type change-speed machine is employed.

In the present power transmission apparatus 18, an additional-shaft-side input gear 323 is put in place between two of an output shaft 32's drive gears 311-316 in the axial direction. By doing thusly, it is possible to make an axially shorter shaft than is the additional shaft 6 that is used in the power transmission apparatus 16 according to Embodying Mode No. 8.

Alternatively, it is possible to use either one of the drive gears 311-315 as the additional-shaft-side input gear 323 with which the additional shaft 6's transmission gear 65 meshes. Thus, since it is allowable to add no gear for transmitting the output, which comes from the rotary electric device 4, to the output shaft 32, the overall length of the power transmission apparatus itself can be reduced in the axial direction; and since the additional shaft 6 is also reduced and the gears decrease as well, costs are kept down.

### (Other Embodying Modes)

Although suitable embodying modes according to the present invention have been explained so far, the present invention is not one which is limited to the aforementioned embodying modes.

When switching the gear-shift stages of the multistaged change-speed mechanism 3, it becomes likely to synchronize the revolution speeds with those on the side of the output shaft 32 by putting the first power interrupting mechanism 51 (or 53) into the connected state and then making the revolution of the input shaft 31 coincide with a revolution speed of the next gear-shift stage by the rotary electric device 4, and accordingly the speed change can be carried out smoothly. It becomes feasible to make the capacity of synchronizing mechanisms, which are to be put in place onto the respective gear-shift stages, smaller, or to remove then, by thus assisting the switching of the gear-shift stages with the rotary electric device 4, and consequently the saving of the weight and the reduction of the costs can be intended.

As themultistaged change-speed mechanism 3, it is possible to use, not AMT, but ordinary MT that is free from any actuator. If such is the case, it is desirable that both of the following can be detected when switching the gear-shift stages: not only the switching of the gear-shift stages is carried out but also which of the gear-shift stages is selected next. It is possible to make the gear-shifting operations progress smoothly by means of the information on the progress of speed change and on the next gear-shift stage.

It is desirable to detect before the current gear-shift stage is disconnected that gear shifting is carried out. Moreover, it is desirable to detect the next gear-shift stage before coupling (or speed change) is completed. It is possible to detect these not only from the progress of speed change but also from the shift lever for carrying out the selection of gear-shift stages.

For example, it is possible to detect that the switching of gear-shift stages is about to be carried by detecting the following: a driver has touched the shift lever; he or she has applied force to the shift lever in order to operate it; or the shift lever has been moved from the position of a gate at the current gear-shift stage. As for means for detecting that the shift lever has been touched, it is possible to think of the following: touch detection sensors or heat detection sensors, and the like, for detecting that a hand has touched the leading end part of the shift lever. As for means for detecting that force has been applied to the shift lever, it is possible to think of a method of detecting the occurrence of strain at the rod-shaped part, and so forth. And, as for means for detecting that the shift lever has been moved from the position of a gate at the current gear-shift stage, it is possible to think of using a sensor for detecting that the rod-shaped part has passed through that position in the middle of gating.

And, the detection that a subsequent stage has been obtained can be obtained by detecting that the shift lever is shifted from a gate at the neutral position into a subsequent gear-shift stage and has then been passed through a gate at that shift stage.

## Claims

1. A power transmission apparatus being **characterized in that** it comprises:
a multistaged change-speed mechanism having an input shaft to which a rotary power that is output from an output shaft of an internal combustion engine is input, and an output shaft for changing said rotary power, which is input from said input shaft, in speed with a plurality of switchable speed reducing ratios, and then outputting the resulting rotary power to wheels;
a rotary electric device;
a rotary-electric-device-side output shaft for outputting a rotary power of said rotary electric device to said wheels;
a first power interrupting mechanism for switching the connection and disconnection of rotary-power transmission between said input shaft of said multistaged change-speed mechanism and a rotor of said rotary electric device;
a second power interrupting mechanism for switching the connection and disconnection of rotary-power transmission between said rotary-electric-device-side output shaft and said rotor of said rotary electric device; and
a controlling unit for controlling said rotary electric device, said first power interrupting mechanism, and said second power interrupting mechanism.

2. The power transmission apparatus as set forth in claim 1, wherein:
a stator of said rotary electric device is positioned on an outer peripheral side of said rotor, and said rotor has a ring configuration;
said output shaft of said internal combustion engine, said input shaft of said multistaged change-speed mechanism, said rotor of said rotary electric device, and a rotary shaft of said rotary-electric-device-side output shaft are all coaxial; and
said first power interrupting mechanism, and said second power interrupting mechanism are disposed on an inner peripheral side of said rotor while lining up in an axial direction of said output shaft of said internal combustion engine.

3. The power transmission apparatus as set forth in claim 1 or 2, wherein:
said output shaft of said multistaged change-speed mechanism has an output gear that meshes with a final deceleration gear;
said input shaft of said multistaged change-speed mechanism, and said output shaft thereof are disposed to protrude parallelly on a side of said rotary electric device; and
said rotary-electric-device-side output shaft has a rotary-electric-device-side output gear for transmitting a rotary power to said final deceleration gear by way of said output gear.

4. The power transmission apparatus as set forth in claim 1 or 2, wherein:
said rotary-electric-device-side output shaft has a rotary-electric-device-side output gear; and
the power transmission apparatus further comprises an additional shaft having a transmission gear that meshes with both of said rotary-electric-side output gear and said final deceleration gear between them, thereby transmitting a rotary power from said rotary-electric-side output gear to said final deceleration gear.

5. The power transmission apparatus as set forth in either one of claims 1-4 having a planetary gear mechanism in which said rotary-electric-device-side output shaft is connected to one of the elements and said rotor of said rotary electric is disconnected from and connected to another one of the elements by way of said second power interrupting mechanism.

6. The power transmission apparatus as set forth in claim 1 or 2, wherein:
said multistaged change-speed mechanism comprises a counter shaft;
the rotary power of said internal combustion engine, and the rotary power of said rotary electric device are transmitted to said input shaft of said multistaged change-speed mechanism, and to said output shaft, by way of said counter shaft;
said input shaft of said multistaged change-speed mechanism, and said counter shaft thereof are disposed to protrude parallelly on a side of said rotary electric device;
said counter shaft has a rotary-electric-device-side input gear to which an output of said rotary electric device is input; and
said rotary-electric-device-side output shaft has a rotary-electric-device-side output gear that meshes with said rotary-electric-device-side input gear.

7. The power transmission apparatus as set forth in claim 1 or 2, wherein:
said multistaged change-speed mechanism comprises a counter shaft, and an additional shaft;
the rotary power of said internal combustion engine, and the rotary power of said rotary electric device are transmitted to said input shaft of said multistaged change-speed mechanism, and to said output shaft, by way of said counter shaft;
said input shaft of said multistaged change-speed mechanism, and said additional shaft thereof are disposed to protrude parallelly on a side of said rotary electric device;
said rotary-electric-device-side output shaft has a rotary-electric-device-side output gear for transmitting the rotary power of said rotary electric device to a side of said output shaft;
said output shaft has an additional-shaft-side input gear in order that the rotary power of said rotary electric device is transmitted by way of said additional shaft; and
said additional shaft has an input-side transmission gear at one of the ends, input-side transmission gear which meshes with said rotary-electric-device-side output gear, and an output-side transmission gear that meshes with said input-shaft-side input gear.
